# EUROPEAN PATENT SPECIFICATION

(11) **EP 2 432 624 B1**
(45) Date of publication and mention of the grant of the patent: **18.12.2013**
(21) Application number: 09786399.7
(22) Date of filing: 18.05.2009
(51) Int. Cl.: B25B 27/00

(54) **MAGNETIC ROLLER APPARATUS FOR MOUNTING BY PRESSURE**
MAGNETISCHES WALZENGERÄT ZUM MONTIEREN MITTELS DRUCK
APPAREIL À ROULEAU MAGNÉTIQUE POUR MONTAGE PAR APPLICATION DE PRESSION

(43) Date of publication of application: 28.03.2012
(73) Proprietor: Tofas Turk Otomobil Fabrikasi Anonim Sirketi, 16369 Bursa (TR)
(72) Inventor: KOCA, Ali, Osman, 16369 Bursa (TR)
(74) Representative: Dericioglu Kurt, Ekin
(86) International application number: PCT/IB2009/052058
(87) International publication number: WO 2010/133917

(56) References cited:
- DE-U1- 20 004 301
- FR-A- 2 852 544
- FR-A- 2 874 547
- JP-A- 63 049 273
- US-B1- 7 393 430

## Description

### Field of the Invention

The present invention relates to a magnetic roller apparatus used in automotive industry for mounting pieces (e.g. door water shields) which are mounted by applying pressure on them.

### Background of the Invention

In production of motor vehicles, some parts are mounted manually. A certain force should be applied on the piece to be mounted in a part of the said mounting processes. For example the door water shields that provide sealing at the doors of the motor vehicles are mounted this way. Pressure is applied to the door water shields by plastic roller apparatuses (rolling) during mounting, so that the adhesive paste on the water shields adhere to the sheet metal on the vehicle door.

During rolling, pressure should be exerted continuously on the piece that is desired to be mounted. This causes decrease in the performance of the worker carrying out the process due to the ergonomic discomfort and tiredness experienced by him/her. This in turn causes decrease in mounting quality and leads to faults.

The International patent document W02007082915, known in the art, discloses a technique used in mounting door bands of vehicles. In this technique, bands are mounted on the door by applying pressure on the bands by a fixed roller arm.

### Summary of the Invention

The objective of the present invention is to provide a roller apparatus which enables to mount (seal) the door water shields with pressure by exerting less force and in a more ergonomic manner.

Another objective of the invention is to provide a roller apparatus, which ensures that the mounting (sealing) of the door water shields is of better quality and which enables to prevent process variability.

### Detailed Description of the Invention

The roller apparatus developed to fulfill the objectives of the present invention is illustrated in the accompanying figures, in which,
Figure 1 is the side view of the roller apparatus.
Figure 2 is the top view of the roller apparatus.
Figure 3 is the side view of the body.
Figure 4 is the top view of the body.
Figure 5 is the perspective view of an embodiment of the roller apparatus.
Figure 6 is the perspective view of another embodiment of the roller apparatus.
Figure 7 is the sectional view of the dyeing (staining) unit.

The components given in the figures are individually numbered where the numbers refer to the following:
1. Roller apparatus
2. Body
3. Handle
4. Roller
5. Dyeing unit
6. Body
7. Dye (stain)
8. Spring

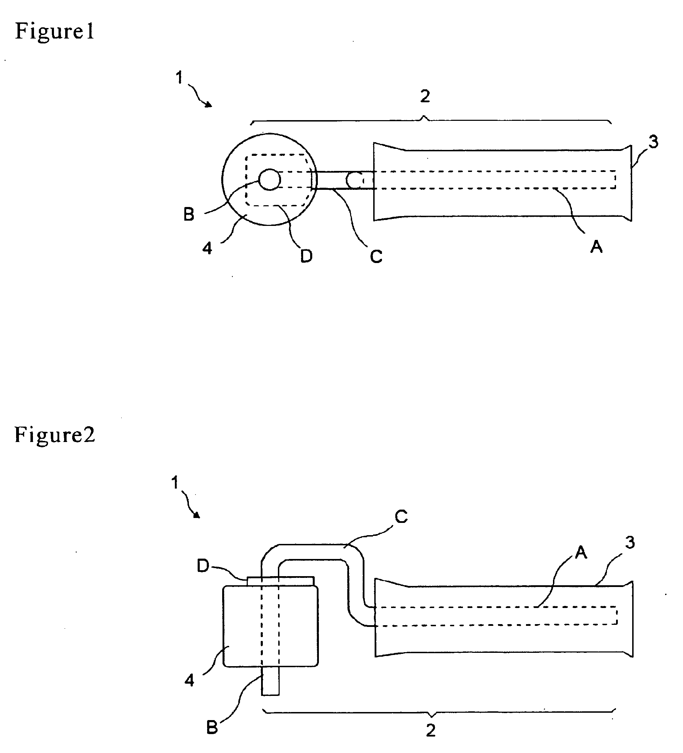

The roller apparatus (1) comprises
- a body (2) having the parts of stem (A), shaft (B), connector (C) and stopper (D),
- at least one handle (3) fitted over the stem (A) part of the body (2),
- at least one roller (4) fitted over the shaft (B) part of the body (2) (Figure 1, Figure 2).

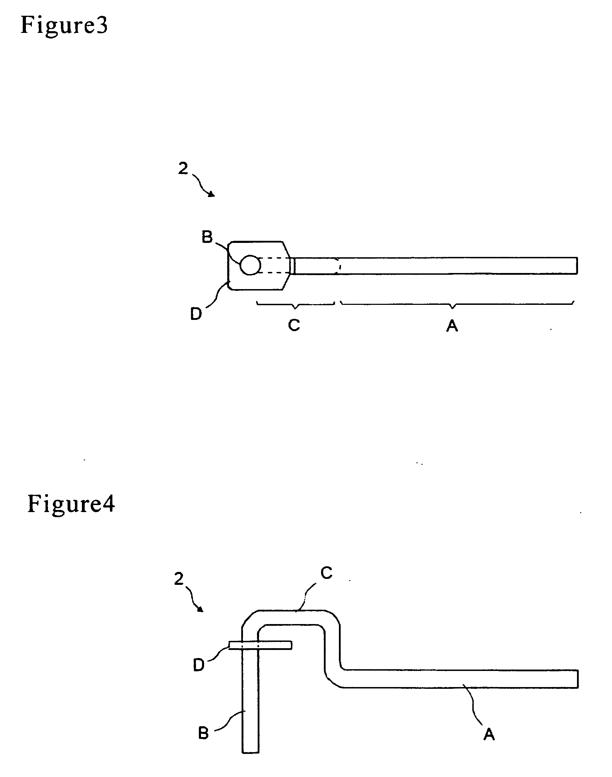

The body (2) is preferably manufactured from metal. The shaft (B) is positioned such that there is an empty space between the center thereof and one end of the stem (A), and that it is perpendicular to the stem (A) part. The stem (A) and the shaft (B) are connected to each other by means of a connector (C) connecting one end of the shaft (B) with the end of the stem (A) which is closest to the said end of the shaft (B). Additionally there is provided on the shaft (B) a stopper (D) to which the roller (4) mounted thereon abuts (Figure 3, Figure 4).

The handle (3) is preferably manufactured from a plastic material. The handle (3) surrounds the stem (A) like a case forming the part from where the roller apparatus (1) will be held. The outline of the handle (3) has an ergonomic form that facilitates gripping by hand. This way, the handle (3) facilitates gripping and prevents the roller apparatus (1) from slipping away from hand.

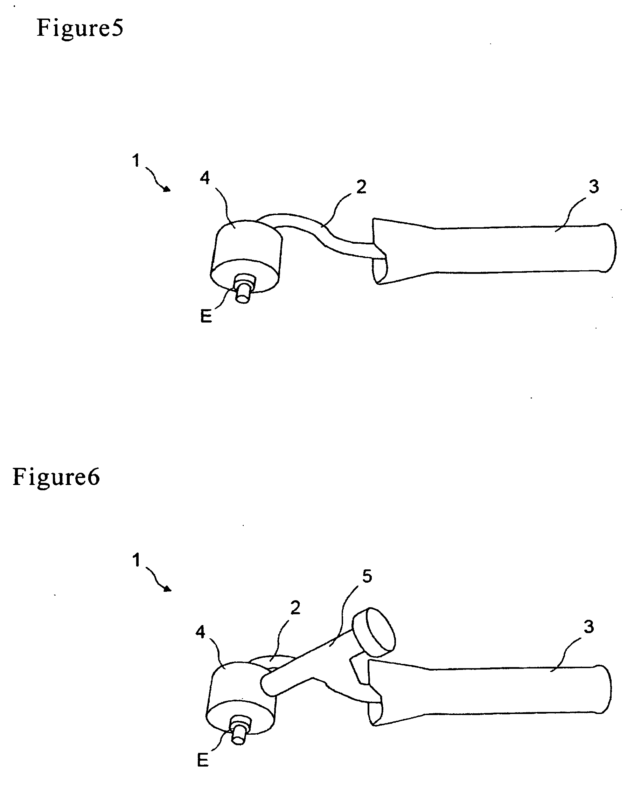

The roller (4) is the part which contacts the piece that is desired to be mounted by means of the roller apparatus (1) and which applies pressure on the said piece. The roller (4) has a cylindrical form having an aperture in the axis between its bases through which the shaft (B) can pass. The roller (4) is mounted to the body (2) such that it will be able to rotate about the axis of the shaft (B), by having its aperture axis fitted over the shaft (B) and with a connecting member (E) attached to the end of the shaft (B) (Figure 5).

The roller (4) is comprised of a cylindrical magnet having an aperture in the center thereof forming the rotation axis and a plastic coating on the said magnet. By means of the magnetic structure of the roller (4), an attraction force is produced on the roller apparatus (1) during the mounting process by the metal parts of the vehicle being assembled. By means of this force, the force which is required to be exerted manually on the piece that is mounted decreases and the mounting process is facilitated. For example, in mounting the door water shield to the vehicle door, when the door water shield is being fastened by being pressed onto the door by the roller apparatus (1), a magnetic attraction force is produced between the inner sheet metal of the door and the roller apparatus (1).

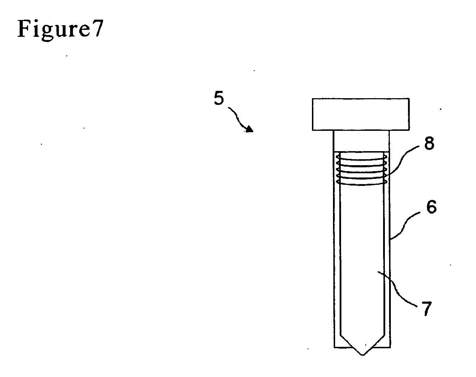

In one embodiment of the invention, the roller apparatus (1) comprises a dyeing unit (5) which enables to leave a dye mark on the surface where the roller (4) contacts. The dyeing unit (5) comprises a prismatic or cylindrical hollow body (6), a solid dye (7) which is disposed within the body (6) and whose one end protrudes from the lower end of the body (6), and a spring (8) which enables the dye (7) to move within the body (6) in the direction of the body (6) axis in a limited distance (Figure 7). The dyeing unit (5) is connected to the body (2) from the point where the stem (A) and the connector (C) are connected. The dyeing unit (5) is an inclined structure approaching towards the roller (4) over the plane formed by the handle (A), shaft (B) and connector (C). The end of the dye (7) protrudes from the end of the dyeing unit (5) which is close to the roller and the end of the dye (7) contacts the roller (4). However the end of the dye (7) contacting the roller (4) exerts a small amount of force on the roller (4) such that it will not prevent rotation movement of the roller (4). As a result of the roller (4) surface, which is rotating during mounting, getting dyed by the dye (7), the roller (4) is ensured to leave a mark on the surface that it passes over. The dye (7) that is used is preferably pastel and can be replaced with the new ones as they are finished.

When mounting with the roller apparatus (1), the roller (4) leaves the dye that it receives from the dyeing unit (5) onto the mounting piece that it passes over. Thus the areas where the roller (4) has passed over the mounted piece are dyed and thereby, the person who will perform mounting is enabled to distinguish the areas on which pressure is applied and those on which pressure is not applied (Figure 6).

The invention is not limited to the above described embodiments. The person skilled in the art can easily produce different embodiments of the invention. These should be evaluated within the scope of the protection claimed by the claims of the invention.

## Claims

1. A roller apparatus (1) for use in the automotive industry for mounting pieces which are mounted by applying pressure on them, said apparatus comprising
- a body (2) having the parts of stem (A), shaft (B) which is positioned such that there is an empty space between the center thereof and one end of the stem (A), and that it is perpendicular to the stem (A) part, connector (C) connecting one end of the shaft (B) with the end of the stem (A) which is closest to the said end of the shaft (B) and stopper (D),
- at least one handle (3) which is fitted over the stem (A) part of the body (2),
- at least one roller (4) which is fitted over the shaft (B) part of the body (2) and which is able to rotate about the axis of the shaft (B) and comprised of a cylindrical magnet having an aperture in the center thereof forming the rotation axis and the plastic coating on the said magnet
**characterized by** at least one dyeing (staining) unit (5) which comprises dye (7) is connected to the body (2) at the point where the stem (A) and the connector (C) are connected; and which unit enables a dye mark to be left on the mounting surface where the roller (4) contacts, by transferring the dye onto the surface of the roller (4) during rotational use.

2. A roller apparatus (1) according to Claim 1, **characterized by** a body (2) having a stopper (D) to which the roller (4) mounted on the shaft (B) abuts.

3. A roller apparatus (1) according to Claim 1 or 2, **characterized by** at least one dyeing (staining) unit (5) which has an inclined structure approaching towards the roller (4) over the plane formed by the handle (A), shaft (B) and connector (C); and wherein there is a distance between the roller (4) and the end of the unit that is close to the roller such it will not block rotation movement of the roller (4).

4. A roller apparatus (1) according to Claim 3, **characterized by** at least one dyeing (staining) unit (5) which comprises a prismatic or cylindrical hollow body (6); a solid dye (7) which is disposed within the body (6) and whose one end protrudes from the lower end of the body (6); and a spring (8) which enables the dye (7) to move within the body (6) in the direction of the body (6) axis in a limited distance

5. A roller apparatus (1) according to Claim 4, **characterized by** a dyeing unit (5) comprising solid dye (7) whose end protruding from the body (6) contacts the roller (4).

6. A roller apparatus (1) according to any of the preceding claims, **characterized by** a body (2) produced from metal.

7. A roller apparatus (1) according to any of the preceding claims, **characterized by** a handle (3) which surrounds the stem (A) like a case forming the part from where the roller apparatus (1) will be held and whose outline has an ergonomic form that facilitates gripping by hand.

8. A roller apparatus (1) according to any of the preceding claims, **characterized by** a handle (3) produced from plastic.

## Patentansprüche

1. Ein Rollapparat (1) zur Anwendung in der Automobilindustrie für Anbau von Teilen, die durch Anbringen eines Drucks auf sie befestigt werden; der erwähnte Apparat umfasst
- einen Körper (2), der die Teile des Stiels (A) aufweist, den Schaft (B), der so positioniert ist, dass es zwischen dessen Mittelpunkt und einem Ende des Stiels (A) einen Leerraum gibt und dass dem Teil des Stiels (A) senkrecht ist, einen Konnektor (C), der ein Ende des Schafts (B) mit dem Ende des Stiels verbindet, das dem erwähnten Ende des Schafts (B) am nächsten liegt und einen Anschlag (D),
- zumindest einen Griff (3), der im Bereich des Stielteils (A) des Körpers (2) eingebaut ist,
- zumindest eine Walze (Rolle) (4), die im Bereich des Schaftteils (B) des Körpers (2) eingebaut und in der Lage ist um die Achse des Schafts (B) zu rotieren undaus einem zylindrischen Magnet, der eine die Drehachse bildende Öffnung in dessen Mitte aufweist und aus einer Kunststoffbeschichtung auf dem erwähnten Magnet besteht,
**gekennzeichnet durch** mindestens eine Färben-Einheit (5), die einen Farbstoff (7) enthält und dem Körper (2) an dem Punkt angeschlossen ist, wo der Stiel (A) und der Konnektor (C) angeschlossen sind; und welche Einheit ermöglicht links von der Montagefläche, die die Walze (4) berührt, eine Farben-Markierung, wobei der Farbstoff beim Drehen und bei der Anwendung auf die Oberfläche der Walze (4) übertragen wird.

2. Ein Rollapparat (1) nach Anspruch 1, **gekennzeichnet durch** einen Körper (2) aufweisend einen Anschlag (D), an den die auf dem Schaft (B) angeordnete Walze (4) anliegt.

3. Ein Rollapparat (1) nach Anspruch 1 oder 2, **gekennzeichnet durch** mindestens eine Färbungseinheit (5), die eine schräge Struktur aufweist, welche auf der **durch** den Stiel (A), den Schaft (B) und den Konnektor (C) gespannten Ebene sich gegen die Walze (4) nähert; und wobei es einen Abstand zwischen der Walze (4) und dem zu der Walze nahen Ende der Einheit gibt, so dass es die Drehbewegung der Walze nicht blockieren soll.

4. Ein Rollapparat (1) nach Anspruch 3, **gekennzeichnet durch** mindestens eine Färbungseinheit (5), die einen prismatischen oder zylindrischen Hohlkörper (6) aufweist; einen festen Farbstoff (7), der im Körper (6) angeordnet ist und dessen ein Ende aus dem unteren Ende des Körpers (6) herausragt; und eine Feder (8), die es ermöglicht, dass der Farbstoff (7) sich innerhalb des Körpers (6) in Richtung der Achse des Körpers (6) in einer begrenzten Strecke bewegt.

5. Ein Rollapparat (1) nach Anspruch 4, **gekennzeichnet durch** eine festen Farbstoff (7) aufweisende Färbungseinheit (5), deren aus dem Körper (6) herausragendes Ende die Walze (4) berührt.

6. Ein Rollapparat (1) nach einem der vorhergehenden Ansprüche, **gekennzeichnet durch** einen Körper (2), der aus Metall hergestellt ist.

7. Ein Rollapparat (1) nach einem der vorhergehenden Ansprüche, **gekennzeichnet durch** einen Griff (3), der den Stiel (A) wie ein Gehäuse umgibt, das denjenigen Teil bildet, **durch** den der Rollapparat (1) gehalten werden soll und dessen Kontur eine ergonomische Form aufweist, die das Greifen mit der Hand erleichtert.

8. Ein Rollapparat (1) nach einem der vorhergehenden Ansprüche, **gekennzeichnet durch** einen Griff (3), der aus Kunststoff gefertigt ist.

## Revendications

1. Un dispositif de poulie (1) pour l'utilisation dans l'industrie d'automobile pour les pièces de montage montées en pressant sur ces dernières; ledit dispositif comportant:
- un corps (2) possédant d'un guide (A), des pièces de tourillon (B) positionné dans une manière qu'il existe une cavité dans son centre et encore une cavité à l'une de ses extrémités perpendiculairement à la pièce de guidage (A), un connecteur (C) reliant l'une des extrémités du tourillon (B) avec l'extrémité du guide le plus proche à ladite extrémité du tourillon et la pièce d'arrêt (D),
- au moins une poignée de préhension (3) étant montée sur la pièce de guidage (A) du corps (2);
- au moins une poulie (4) montée sur la pièce de tourillon (B) du corps (2) et susceptible de pivoter autour de l'axe du tourillon (B) et consistant en un aimant cylindrique possédant un jeu dans son centre formant l'axe de pivotement et un revêtement plastique sur ledit aimant;
**caractérisée par** au moins une unité de peinture (maculage) (5) comportant une substance colorante (7) reliée au corps (2) au point où le guide (A) et le connecteur (C) sont reliés, et permettant la déposition d'une marque de teinture sur la surface de montage en contact avec la poulie (4) en transmettant la teinture sur la surface de la poulie (4) pendant l'utilisation en pivotement.

2. Un dispositif de poulie (1) selon la revendication 1, **caractérisé par** un corps (2) comportant une la pièce d'arrêt (D) sur laquelle appuie la poulie (4) montée sur le tourillon (B).

3. Un dispositif de poulie (1) selon les revendication 1 ou 2, **caractérisé par** au moins une unité de peinture (maculage) (5) ayant une structure inclinée approchant vers la poulie (4) sur le plan formé par la poignée de préhension (A) et le connecteur (C), dans lequel il existe une distance entre la poulie (4) et l'extrémité de l'unité proche à la poulie dans une manière n'empêchant pas le mouvement de pivotement de la poulie (4).

4. Un dispositif de poulie (1) selon la revendication 3, **caractérisé par** au moins une unité de peinture (maculage) (5) comportant un corps creux (6) prismatique ou cylindrique, une substance colorante (7) solide placée à l'intérieure du corps (6) et dont l'une de ses extrémités fait saillie de l'extrémité inférieure du corps (6), et un ressort (8) permettant le mouvement de la substance colorante (7) à l'intérieure du corps (6) dans la direction du l'axe du corps (6) dans une distance limitée.

5. Un dispositif de poulie (3) selon la revendication 4, **caractérisé par** une unité de peinture (5) comportant une substance colorante (7) solide dont l'extrémité fait saillie du corps (6) en contact avec le poulie (4).

6. Un dispositif de poulie (1)selon l'une quelconque des revendications précédentes, **caractérisé par** un corps (6) réalisé en métal.

7. Un dispositif de poulie (1)selon l'une quelconque des revendications précédentes, **caractérisé par** une poignée (3) entourant le guide (A) comme une boîte formant la partie à partir de laquelle le dispositif de poulie (1) serait tenu et dont le contour possède d'une forme ergonomique facilitant la prise par main.

8. Un dispositif de poulie (1)selon l'une quelconque des revendications précédentes, **caractérisé en ce qu'**il comporte une poignée de préhension (3) réalisé en plastique.
